# EUROPEAN PATENT APPLICATION

(11) **EP 2 290 994 A1**
(43) Date of publication of application: **02.03.2011**
(21) Application number: 10161501.1
(22) Date of filing: 29.04.2010
(51) Int. Cl.: H04N 13/00

(54) **3-dimensional image providing and receiving apparatuses, 3-dimensional image providing and receiving methods using the same, and 3-dimensional image system**

(30) Priority: 22.07.2009 KR 20090066810
(71) Applicant: SAMSUNG ELECTRONICS CO., LTD., Suwon-si Gyeonggi-do 442-742 (KR)
(72) Inventor: Seong, Ki-bum, Gyeonggi-do (KR); Sung, Jun-ho, Seoul (KR); Kwak, Jong-kil, Gyeonggi-do (KR); Yun, Sang-un, Seoul (KR)
(74) Representative: Davies, Robert Ean

(57) **Abstract**

A 3-dimcnsional image providing and receiving apparatus, 3-dimensional image providing and receiving methods using the same, and a 3-dimensional image system are provided. A 3-dimensional image receiving apparatus includes a phase conversion unit which converts phases of alternately output image signals, and a control unit which alternately blocks the image signals having the converted phases. Therefore, a viewer can view a 3-dimensional image output by a display apparatus having a polarization property without inconvenience in any positions.

## Description

### CROSS-REFERENCE TO RELATED APPLICATIONS

This application claims priority from Korean Patent Application No. 10-2009-0066810, filed on July 22, 2009 in the Korean Intellectual Property Office, the disclosure of which is incorporated herein by reference in its entirety.

### BACKGROUND

### 1. Field

Apparatuses and methods consistent with the inventive concept relate to 3-dimensional image providing and receiving apparatuses, 3-dimentional image providing and receiving methods using the same, and a 3-dimensional image system, and more particularly, to providing and receiving a 3-dimensional image which is transmitted from a display apparatus having polarization property.

### 2. Description of the Related Art

3-dimensional stereoscopic imaging technology is applied to diverse fields such as information telecommunication, broadcasting, medical service, education training, military service, games, animation, virtual reality, computer-aided design (CAD), industrial technologies, and the like, and is a core base technology of 3-dimensional stereoscopic multimedia information communication commonly required in such diverse fields.

In general, a 3-dimensional effect sensed by viewers is generated by a combination of the degree of change in the depth of the eye lens according to position of an object, the difference in angle between each eye and the object, the difference in position and shape of the object viewed by the left and right eyes, the difference in time according to the movement of the object, an effect according to mental state and memory, and the like.

Binocular disparity resulting from the eyes' horizontal separation of approximately 6-7cm is the most important factor of stereopsis. That is, if a viewer views an object with a difference in angle by binocular disparity, the eyes have two different retinal images, the different retinal images are transmitted to the brain, and the brain combines the two retinal images precisely, so the viewer can feel the original 3-dimensional stereoscopic image.

Stereoscopic image display apparatuses are divided into a glasses-type using particular glasses, and a non-glasses-type without using particular glasses. Glasses-type stereoscopic image display apparatuses use methods including a color filter method of separating and selecting an image using color filters which have a complementary color relationship, a polarizing filter method of separating images of the left and right eyes by shading the light by combining polarizing elements crossing at right angles, and a shutter glasses method of alternately blocking one eye and then the other eye according to a synchronization signal which projects a left eye image signal or a right eye image signal on screen so as to enable the viewer to sense a 3-dimensional effect.

Among these methods, the shutter glasses method is a display method using binocular disparity between perspectives of both eyes. In the shutter glasses method, the offer of images by a display apparatus is synchronized by alternately darkening each eye, so the brain recognizes space sense due to images viewed in different perspectives.

In general, shutter glasses used in the shutter glasses method are produced to have the same polarization property as that of a display apparatus so that the shutter glasses can receive a left eye image signal and a right eye image signal from the display apparatus having a polarization property and provides the viewer with the received signals. For example, if the display apparatus has a polarization property in a vertical direction, the shutter glasses are produced to have a polarization property in a vertical direction, so the viewer has no problem viewing the left eye image signal and the right eye image signal provided by the display apparatus.

In this case, the viewer has no problem viewing a 3-dimensional image in a sitting or standing position with the shutter glasses worn. However, if the viewer views a 3-dimensional image in a position that the viewer turns his or her head to the left or right or lies down, the polarization property of the display apparatus has a different direction from the polarization property of the shutter glasses, so the viewer may view a 3-dimentional image having poor brightness.

Therefore, there is a need for methods for the viewer to view a 3-dimentional image of good quality in any positions.

### SUMMARY

Exemplary embodiments address at least the above problems and/or disadvantages and other disadvantages not described above. Also, the exemplary embodiments are not required to overcome the disadvantages described above, and an exemplary embodiment may not overcome any of the problems described above.

One or more exemplary embodiments provide 3-dimensional image providing and receiving apparatuses which enable a viewer to view a 3-dimentional image which is output from a display apparatus having polarization property while the viewer is in any position, 3-dimentional image providing and receiving methods using the same, a 3-dimensional image system.

According to an exemplary embodiment, there is provided a 3-dimensional image receiving apparatus including a phase conversion unit which receives a first image signal and a second image signal which are alternately output, and converts phases of the first image signal and the second image signal, and a control unit which alternately blocks the first image signal and the second image signal having the converted phases.

The first image signal and the second image signal may have linear polarization, and the phase conversion unit may convert the phases of the first image signal and the second image signal so that the linear polarization of the first image signal and the second image signal can be converted into circular polarization.

The first image signal may be a left eye image signal, and the second image signal may be a right eye image signal.

The 3-dimensional image receiving apparatus may further include a left eye glass which receives the left eye image signal, and a right eye glass which receives the right eye image signal, wherein the control unit may alternately block the first image signal and the second image signal having the converted phases, by alternately opening or closing respective shutters which are formed on the left eye glass and the right eye glass.

The phase conversion unit may be implemented with a phase delay filter which is attached to the left eye glass and the right eye glass.

The 3-dimensional image receiving apparatus may further include a reception unit which receives a synchronization signal to synchronize with an external device which transmits the first image signal and the second image signal, wherein the control unit may alternately block the first image signal and the second image signal having the converted phases, based on the synchronization signal.

According to another exemplary embodiment, there is provided a 3-dimensional image providing apparatus including an image generation unit which generates a first image signal and a second image signal, a phase conversion unit which converts phases of the first image signal and the second image signal, and an image output unit which alternately outputs the first image signal and the second image signal having the converted phases.

According to yet another exemplary embodiment, there is provided a 3-dimensional image system including an image output apparatus which alternately outputs a left eye image signal and a right eye image signal, a phase conversion apparatus which converts phases of the left eye image signal and the right eye image signal, and an image receiving apparatus which alternately receives the left eye image signal and the right eye image signal having the converted phases.

According to another exemplary embodiment, there is provided a 3-dimensional image providing method including receiving a first image signal and a second image signal which are alternately output, and converting phases of the first image signal and the second image signal, and providing a viewer with the first image signal and the second image signal having the converted phases by alternately blocking the first image signal and the second image signal having the converted phases.

The first image signal and the second image signal may have linear polarization, and in converting the phases of the first image signal and the second image signal, the phases of the first image signal and the second image signal may be converted so that the linear polarization of the first image signal and the second image signal can be converted into circular polarization.

The first image signal may be a left eye image signal, and the second image signal may be a right eye image signal.

According to yet another exemplary embodiment, there is provided a 3-dimensional image receiving method including alternately outputting a left eye image signal and a right eye image signal, converting phases of the left eye image signal and the right eye image signal, and alternately receiving the left eye image signal and the right eye image signal having the converted phases.

### BRIEF DESCRIPTION OF THE DRAWINGS

The above and/or other aspects will be more apparent by describing certain exemplary embodiments with reference to the accompanying drawings, in which:

FIG. 1 illustrates a 3-dimensional image system for receiving a 3-dimensional stereoscopic image according to an exemplary embodiment;

FIG. 2 is a block diagram of shutter glasses to which the general inventive concept can be applied;

FIG. 3 illustrates a process of converting linear polarization into circular polarization;

FIG. 4 is a flow chart illustrating 3-dimentional image providing and receiving methods according to an exemplary embodiment; and

FIGS. 5A and 5B illustrate a process of converting linear polarization into circular polarization using a phase delay filter which is provided separately from a display apparatus and shutter glasses.

### DETAILED DESCRIPTION OF EXEMPLARY EMBODIMENTS OF THE INVENTION

Certain exemplary embodiments will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the exemplary embodiments can be practiced without those specifically defined matters. Also, well-known functions or constructions are not described in detail since they would obscure the exemplary embodiments with unnecessary detail.

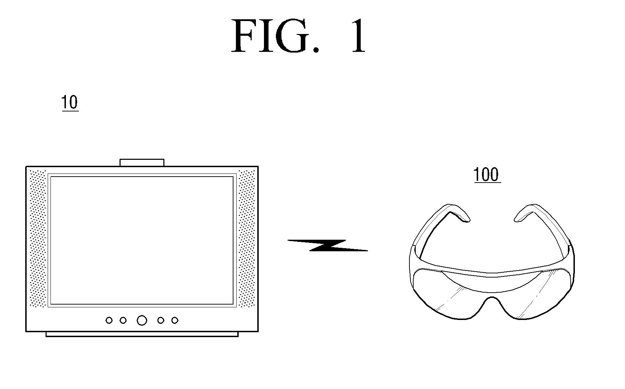

FIG. 1 illustrates a 3-dimensional image system for receiving a 3-dimensional stereoscopic image according to an exemplary embodiment. As illustrated in FIG. 1, the 3-dimensional image system may include a display apparatus 10, and shutter glasses 100 to view a 3-dimensional stereoscopic image.

The display apparatus 10 generates a left eye image and a right eye image, and alternately provides a viewer with the left eye image and the right eye image, so the viewer can view a 3-dimensional image by alternately receiving the left eye image and the right eye image from the display apparatus 10.

In addition, the display apparatus 10 generates a synchronization signal in synchronization with the left eye image or the right eye image, and transmits the synchronization signal to the shutter glasses 100 in an infrared (IR) ray transmission method.

The shutter glasses 100 receive the synchronization signal from the display apparatus 10, and alternately open a left eye glass and a right eye glass in synchronization with the left eye image or the right eye image displayed on the display apparatus 10.

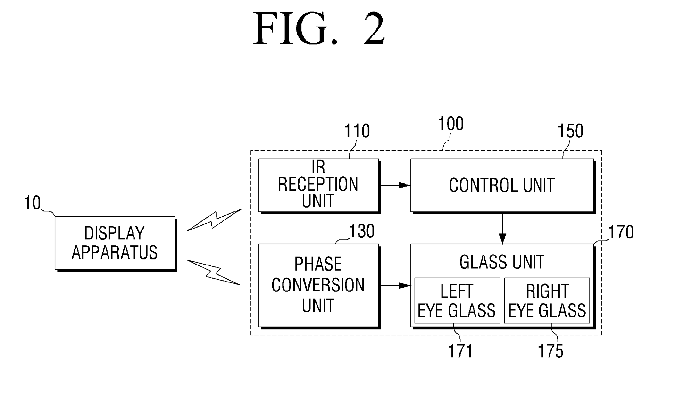

More detailed description of the shutter glasses 100 is given with reference to FIG. 2.

FIG. 2 is a block diagram of the shutter glasses 100 according to an exemplary embodiment. In FIG. 2, the display apparatus 10 is also illustrated for convenience of description. As illustrated in FIG. 2, the shutter glasses 100 may include an infrared (IR) reception unit 110, a phase conversion unit 130, a control unit 150, and a glass unit 170.

The IR reception unit 110 receives a synchronization signal for a 3-dimentional image from the display apparatus 10 which is wirelessly connected to the shutter glasses 100, and transmits the synchronization signal to the control unit 150.

The phase conversion unit 130 receives a 3-dimentional image having linear polarization from the display apparatus 10, and converts linear polarization into circular polarization.

In general, liquid crystal display (LCD) apparatuses such as LCD monitors and LCD televisions output an image having linear polarization in a direction parallel to a display plane. Accordingly, the phase conversion unit 130 may be implemented with a phase delay filter such as a quarter-wave film, and thus converts linear polarization of a left eye image signal and a right eye image signal output by the display apparatus 10 into circular polarization.

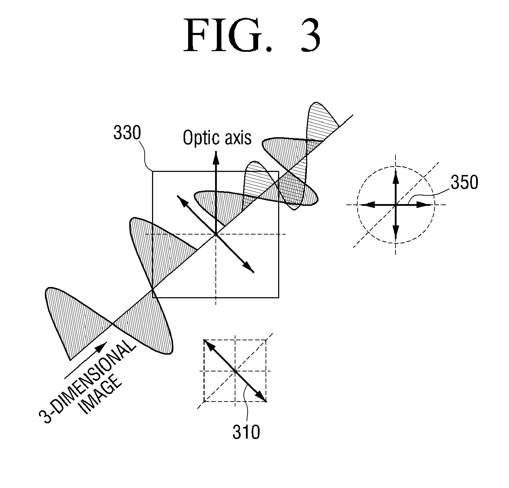

Such a phase delay filter may be attached to a left eye glass 171 and a right eye glass 175. An operating principle of the phase delay filter is described in detail later with reference to FIG. 3.

The phase conversion unit 130 transmits the left or right eye image signal having the converted circular polarization to the glass unit 170.

The glass unit 170 opens or closes a shutter according to a signal output by the control unit 130, so that the shutter glasses 100 can be synchronized with a 3-dimensional image displayed on the display apparatus 10.

The glass unit 170 may include the left eye glass 171 and the right eye glass 175. The left eye glass 171 is provided in order for the viewer to view a left eye image, and the right eye glass 175 is provided in order for the viewer to view a right eye image.

When the display apparatus 10 displays a left eye image, the left eye glass 171 is opened according to a control signal of the control unit 150, so the left eye image can be input to the left eye of the viewer through the left eye glass 171. When the display apparatus 10 displays a left eye image, the right eye glass 175 is closed according to a control signal of the control unit 150, so the left eye image cannot be input to the right eye of the viewer through the right eye glass 175.

In the same manner, when the display apparatus 10 displays a right eye image, the right eye glass 175 is opened according to a control signal of the control unit 150, so the right eye image can be input to the right eye of the viewer through the right eye glass 175. When the display apparatus 10 displays a right eye image, the left eye glass 171 is closed according to a control signal of the control unit 150, so the right eye image cannot be input to the left eye of the viewer through the left eye glass 171.

The phase conversion unit 130 which is implemented with the phase delay filter is attached to the left eye glass 171 and the right eye glass 175. Therefore, the phase conversion unit 130 converts linear polarization of a left eye image which is output by the display apparatus 10 into circular polarization, so the left eye image having circular polarization is input to the left eye glass 171. In addition, the phase conversion unit 130 converts linear polarization of a right eye image which is output by the display apparatus 10 into circular polarization, so the right eye image having circular polarization is input to the right eye glass 175.

The control unit 150 controls the overall operation of the shutter glasses 100. That is, the control unit 150 receives a synchronization signal from the IR reception unit 110, and alternately opens or closes the left eye glass 171 and the right eye glass 175 according to the synchronization signal.

More specifically, based on the synchronization signal received from the IR reception unit 110, the control unit 150 controls the glass unit 170 to open the left eye glass 171 and close the right eye glass 175 when a left eye image is input, and the control unit 150 controls the glass unit 170 to open the right eye glass 175 and close the left eye glass 171 when a right eye image is input.

As a result, when the left eye glass 171 is opened, linear polarization of the left eye image is converted into circular polarization, so the left eye image can be input to the left eye of the viewer, and when the right eye glass 175 is opened, linear polarization of the right eye image is converted into circular polarization, so the right eye image can be input to the right eye of the viewer. Therefore, the viewer can view a 3-dimensional image.

Hereinafter, an operating principle of the phase delay filter is described with reference to FIG. 3.

FIG. 3 illustrates a process of converting linear polarization into circular polarization.

If a 3-dimensional image having linear polarization is input and passes through a quarter-wave film 330 which is a kind of phase delay filter, a phase of the 3-dimensional image is delayed by 90° (λ/4)*,* so that linear polarization 310 is converted into circular polarization 350.

Since the 3-dimensional image having circular polarization 350 is input to the user's left and right eyes, the viewer can view the 3-dimensional image output by the display apparatus 10 in any position.

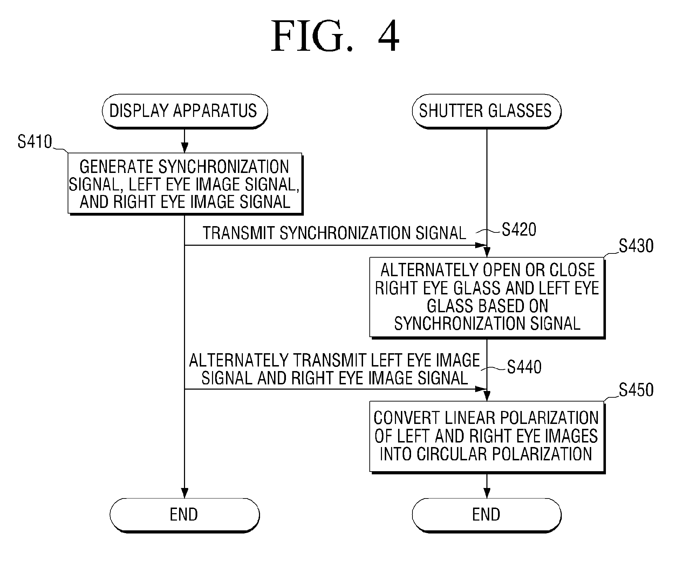

FIG. 4 is a flow chart illustrating 3-dimentional image providing and receiving methods according to an exemplary embodiment.

As illustrated in FIG. 4, the display apparatus 10 generates a synchronization signal, a left eye image signal, and a right eye image signal (S410), and transmits the synchronization signal to the shutter glasses 100 (S420). The shutter glasses 100 alternately opens and closes a right eye glass and a left eye glass based on the synchronization signal (S430).

In addition, the display apparatus 10 alternately transmits the left eye image signal and the right eye image signal to the shutter glasses 100 (S440). The shutter glasses 100 convert linear polarization of the received left and right eye images into circular polarization using the phase delay filter attached to the left eye glass and the right eye glass (S450).

Therefore, the viewer can view a 3-dimensional image output by the display apparatus 10 having a polarization property without inconvenience in any positions.

The phase delay filter such as the quarter-wave filter 330 may be attached to the screen of the display apparatus 10 or be provided separately from the display apparatus 10 and the shutter glasses 100, instead of being attached to the left eye glass 171 and the right eye glass 175 as described above.

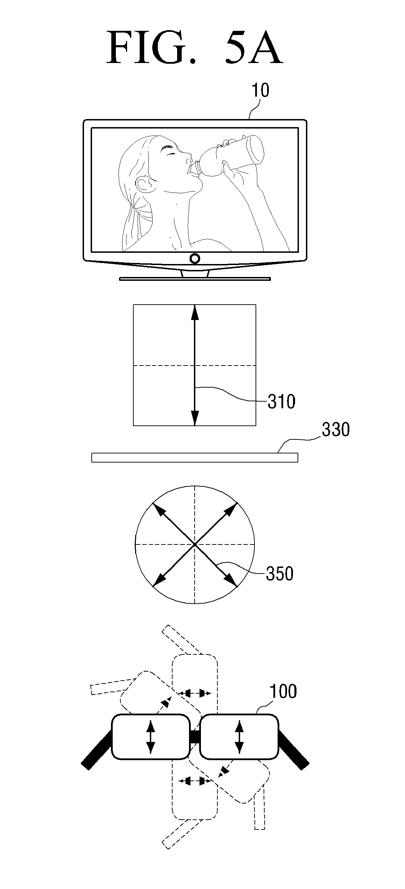

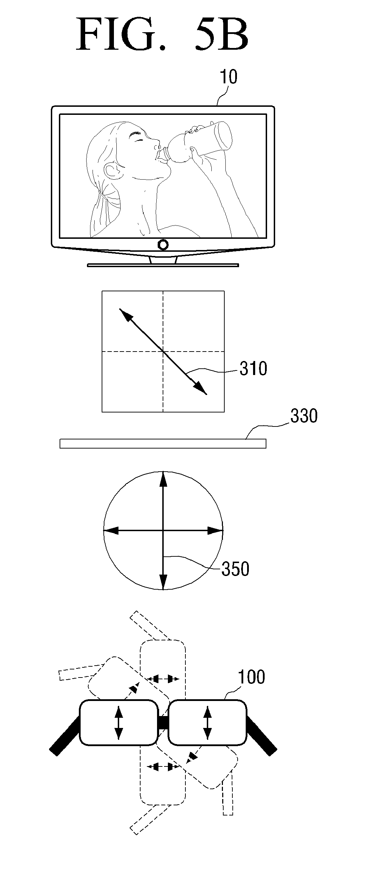

FIGS. 5A and 5B illustrate a process of converting linear polarization into circular polarization according to an exemplary embodiment, using a phase delay filter which is provided separately from the display apparatus 10 and the shutter glasses 100.

As illustrated in FIG. 5A, if a 3-dimensional image output by the display apparatus 10 has linear polarization 310 in a vertical direction, the quarter-wave film 330 disposed between the display apparatus 10 and the shutter glass 100 converts the linear polarization 310 into circular polarization 350.

Accordingly, regardless of the position of the shutter glass 100, the user can view the 3-dimensional image output by the display apparatus 10 with the shutter glasses 100 while the viewer is in any position.

A non-limiting example of the display apparatus 10 which outputs the linear polarization 310 in a vertical direction is an LCD television.

As illustrated in FIG. 5B, according to an exemplary embodiment, if a 3-dimensional image output by the display apparatus 10 has linear polarization 310 in an oblique direction from upper left to lower right, the quarter-wave film 330 disposed between the display apparatus 10 and the shutter glass 100 converts the linear polarization 310 into circular polarization 350.

Accordingly, regardless of the position of the shutter glasses 100, the user can view the 3-dimensional image output by the display apparatus 10.

A non-limiting example of the display apparatus 10 which outputs the linear polarization 310 in an oblique direction from upper left to lower right is an LCD monitor.

The phase delay filter such as the quarter-wave film 330 is not necessarily attached to the left eye glass 171 and the right eye glass 175, and may be provided separately from the display apparatus 10 and the shutter glass 100 as illustrated in FIGS. 5A and 5B, or may be attached to the screen of the display apparatus 10, which is not shown.

Therefore, the viewer can view a 3-dimensional image output by the display apparatus 10 having a polarization property without inconvenience in any position.

The foregoing exemplary embodiments are merely exemplary and are not to be construed as limiting the scope of the claims. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A 3-dimensional image receiving apparatus, comprising:
a phase conversion unit which alternately receives a first image signal and a second image signal, and converts a first image signal phase of the first image signal and a second image signal phase of the second image signal; and
a control unit which alternately blocks the first image signal and the second image signal having the converted first image signal phase and second image signal phase, respectively.

2. The 3-dimensional image receiving apparatus according to claim 1, wherein the first image signal and the second image signal have linear polarization, and the phase conversion unit converts the first image signal phase and the second image signal phase so that the linear polarization of the first image signal and the second image signal can be converted into circular polarization.

3. The 3-dimensional image receiving apparatus according to claim 1 or 2, wherein the first image signal is a left eye image signal, and the second image signal is a right eye image signal.

4. The 3-dimensional image receiving apparatus according to claim 3, further comprising:
a left eye glass which receives the left eye image signal; and
a right eye glass which receives the right eye image signal,
wherein the control unit alternately blocks the first image signal and the second image signal having the converted phases, by alternately opening or closing respective shutters which are formed on the left eye glass and the right eye glass.

5. The 3-dimensional image receiving apparatus according to claim 4, wherein the phase conversion unit comprises a phase delay filter which is attached to the left eye glass and the right eye glass.

6. The 3-dimensional image receiving apparatus according to any one of claims 1 to 5, further comprising:
a reception unit which receives a synchronization signal to synchronize with an external device which transmits the first image signal and the second image signal,
wherein the control unit alternately blocks the first image signal and the second image signal having the first image signal phase and second image signal phase, respectively, based on the synchronization signal.

7. A 3-dimensional image providing method, comprising:
receiving a first image signal and a second image signal which are alternately output, and converting a first image signal phase of the first image signal and a second image signal phase of the second image signal; and
providing a viewer with the first image signal and the second image signal having the converted first image signal phase and second image signal phase, respectively by alternately blocking the first image signal and the second image signal having the converted first image signal phase and second image signal phase.

8. The 3-dimensional image providing method according to claim 7, wherein the first image signal and the second image signal have linear polarization, and in converting the phases of the first image signal and the second image signal, the first image signal phase and the second image signal phase are converted so that the linear polarization of the first image signal and the second image signal can be converted into circular polarization.

9. The 3-dimensional image providing method according to claim 7 or 8, wherein the first image signal is a left eye image signal, and the second image signal is a right eye image signal.
